# EUROPEAN PATENT SPECIFICATION

(11) **EP 0 476 012 B1**
(45) Date of publication and mention of the grant of the patent: **11.10.1995**
(21) Application number: 90909136.5
(22) Date of filing: 01.06.1990
(51) Int. Cl.: B68G 1/00

(54) **STUFFING**
FÜLLMATERIAL
REMBOURRAGE

(30) Priority: 02.06.1989 DK 2719/89
(43) Date of publication of application: 25.03.1992
(73) Proprietor: FOSSNIT A/S, DK-3490 Kvistgaard (DK)
(72) Inventor: FOSS, Lars, DK-2100 Copenhagen O (DK)
(74) Representative: Hegner, Mogens
(86) International application number: DK9000135
(87) International publication number: WO9015016

(56) References cited:
- CH-A- 0 537 874
- CH-A- 0 538 425
- DE-B- 1 131 505
- GB-A- 0 977 872
- US-A- 4 171 401

## Description

The invention concerns a stuffing which consists of a plurality of preferably loosely disposed individual stuffing elements of a plastics material as defined in claim 1.

Stuffing of this type with stuffing elements of an elastic material is widely used for i.a. pillows, eiderdowns and similar bedclothes, for padding of mattresses and upholstered furniture and as thermal insulation in e.g. buildings. Originally, the stuffing has been naturally occurring products alone, such as down, feathers, kapok and curled hair, but nowadays there is also a wide choice of artificially produced materials, such as foamed plastics and fibres of so different materials as plastics, glass and stone.

The known art comprises a variety of artificial materials for making artificial straw for stable-litters, for protection of fragile articles, and for stuffing.

Thus, US patent specification No. 4 171 401 describes artificial straw to replace conventional straw for making stable-litters to be used by animals such horses and bovines.

The dimensions of this artificial straw (in a flat and stretched condition) is indicated to be within the following intervals:

| | GENERAL | PREFERRED | PART. PREFERRED |
|---|---|---|---|
| Thickness (µm) | 60-800 | 100-600 | 150-500 |
| Length (mm) | 30-800 | 100-600 | 150-400 |
| Width (mm) | 1-20 | 2-15 | 2.5-8 |

The aspect ratio (i.e. the ratio length/width) for the artificial straw thus lies within the interval 1.5-800, preferably 7-300, particularly preferred 18-160.

CH patent specification No. 538 425 describes a material for protection of fragile articles, e.g. during transportation, comprising oval, saddle-shaped plates of foamed plastics and a method of producing this material comprising a final foaming step.

Typical dimensions for the unfoamed intermediate product are: Length: 3-20 mm, Width: 2-10 mm, Thickness: 800-3000 µm.

This intermediate product is then subjected to a foaming step whereby the size of the particles is increased by a factor 3-4.

DE patent specification No. 1 131 505 describes a stuffing material for upholstering, and for heat and sound insulation consisting of a number of flexible, corrugated plastics strips which are inter-bonded with a specific binder.

GB patent specification No. 977 872 describes a stuffing material for cushions, mattresses, quilts and the like and for packing comprising a multiplicity of randomly entangled regular shaped foam resin filaments having roughened surfaces to effect interlocking between contacting filaments.

In all cases the consumption of stuffing is very considerable, and it is therefore generally required that the stuffing must be available at a reasonable price, and that it must be easy and safe to work with the stuffing, but the stuffing must at the same time also be capable of complying with a large number of technical specifications which can vary from one application to the other, but which generally comprise standards of density, elastic deformability, insulation capacity and washability, and in most cases the stuffing must additionally be flame retarding and may not cause discomfort to allergics. However, it has been found that the known stuffing materials, in spite of their variety, have not in all cases been fully capable of satisfying the above-mentioned requirements.

The object of the invention is to provide a stuffing of the type mentioned in the opening paragraph, which is so adapted that it can satisfy these requirements better than before.

The invention relates to a stuffing which is the subject-matter of claim 1; preferred embodiments are the subject-matter of claims 2-4.

This entails that the stuffing will be relatively inexpensive to produce and also be very light and elastic since an air volume very large in percentage will occur between the stuffing elements, and the individual elements will act as a sort of leaf springs which elastically transfer forces from a possible load from one element to the other. When stuffing elements of various sizes, thicknesses and configurations are mixed, the stuffing of the invention may additionally be adapted carefully to the various applications.

Since the stuffing consists of a plastics material, it can easily be cleaned by e.g. boiling and autoclaving at bacteria-killing temperatures, and when the plastics material is additionally cross-linked, the strength and elasticity of each individual plate-shaped stuffing element will be equally good in all directions.

If polyethylene or polypropylene is used, the stuffing will moreover be flame retarding.

Additionally, according to the invention, the plastics material may contain a large number of evenly distributed small air cells to obtain a particularly light stuffing having a good thermal insulation capacity.

The invention also relates to a method which is the subject-matter of claim 5; preferred embodiments are the subject-matter of claims 6-10

Thus, according to the invention, a plastics sheet may be used as starting object, which is torn and/or cut into suitable pieces of sheet, each of which is permanently deformed so as to be curved in many directions, or a starting object with a relatively large thickness may be used, which is reduced to the indended thickness of the stuffing element, preferably by rolling or pressing with simultaneous or subsequent tearing and/or cutting into suitable pieces of sheet, each of which is deformed permanently so as to be curved in many directions.

In a particularly expedient embodiment of the method of the invention the stuffing element may be formed from their respective, e.g. ball-shaped or polyhedral, relatively thick starting objects, which are rolled or pressed down to a piece of sheet with desired thickness and curved in many directions. This entails that the stuffing elements may be produced directly from a suitable plastics granulate.

For purposes with e.g. particularly great strength and elasticity requirements may be used a curable plastics material, which may additionally be reinforced with e.g. glass fibre, there being used, according to the invention, a starting object in the form of a rod, tube, block or sheet with a relatively large thickness, and this starting object is subjected to chipping working, such as turning, milling or planing to form a plurality of stuffing elements in the form of thin, foil-like pieces of sheet curved in many directions.

Finally, according to the invention, there may be added to the treatment zone in which the forming of the stuffing elements takes place, a cooling and lubricating liquid having such a consistency and composition that the liquid upon drying leaves a rubber-like coating on the resulting stuffing elements. This improves the wear resistance of the stuffing elements and reduces or eliminates the noise which may occur when the stuffing elements rub against each other.

The invention additionally concerns a use of the above-mentioned stuffing, which is characterized according to the invention in that the stuffing is used for stuffing bedclothes, such as pillows or eiderdowns, for padding of mattresses and upholstered furniture, and as thermal insulation in e.g. houses, refrigerating furniture and similar thermal installations.

The invention will be explained more fully below with reference to the drawings, in which
fig. 1 shows part of a stuffing of the invention,
fig. 2 shows a single one of the stuffing elements belonging to the stuffing shown in fig. 1,
fig. 3 shows schematically how the stuffing elements are produced on the basis of a plastics sheet,
fig. 4 shows schematically how the stuffing elements are produced on the basis of a relatively thick, elongate starting object of plastics,
fig. 5 shows schematically how the stuffing elements are produced on the basis of a plastics granulate, and
fig. 6 shows schematically how the stuffing elements are produced as chips removed by turning from a plastics rod.

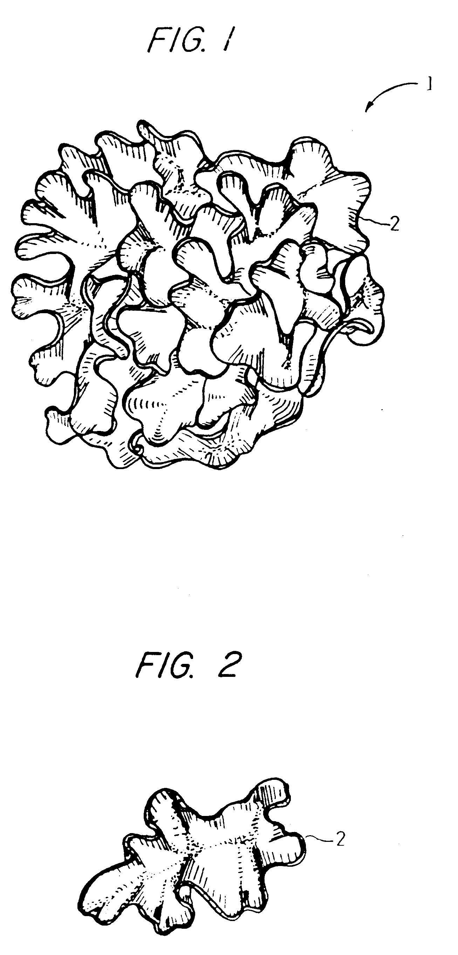

Fig. 1 shows part of a stuffing which is generally indicated by 1 and consists of a large number of stuffing elements 2, which are disposed in a random order in loose contact with each other. Fig. 2 shows by way of example a single one of these stuffing elements 2 consisting of a thin, foil-like piece of sheet, which curves in many directions. Further, this piece of sheet may have any contour and any shape.

When the stuffing 1 is subjected to a load, the forces are transferred from one stuffing element 2 to another stuffing element 2 through the overall stuffing, whereby each individual stuffing element will bend in a proportion corresponding to the size and direction of the forces. Since, however, the moment of resistance to such bending is inversely proportional to the third power of the thickness, and since this, as mentioned, is extremely small, each individual stuffing element can stand a considerable degree of bending without receiving permanent deformations, so that the stuffing as a whole is given a surprisingly good elastic deformability, which can moreover be adapted to any desired purpose by suitable selection of material and shaping of the individual stuffing elements.

Since a plastics material from the group of polyethylene, polypropylene, polyester, polyvinyl chloride and polyvinyl acetate, or physical mixtures, copolymers and laminates of these is used for the making of the stuffing, the stuffing obtains a particularly good strength and elasticity as well as, when the plastics is cross-linked, in particular uniform mechanical properties in all directions. The stuffing can at the same time be washed by e.g. boiling and autoclaving at bacteria-killing temperatures and causes no discomfort to allergics. When the material is polyethylene or polypropylene the stuffing will moreover be flame retarding.

In consequence of the air gap large in percentage, which occurs naturally between the stuffing elements, the stuffing has an advantageous small density and an excellent thermal insulation capacity. These properties may be improved additionally by using a plastics material which itself contains a multitude of small air cells.

The stuffing may particularly be adapted to the individual applications by mixing stuffing elements having various thicknesses, sizes and configurations. Each stuffing elements then has a thickness of between 1 and less than 60 µm, preferably between 5 and 30 µm, and in particular between 10 and 20 µm, as well as an extent of between 1 and 100 mm, preferably between 1 and 30 mm, and in particular between 1 and 15 mm.

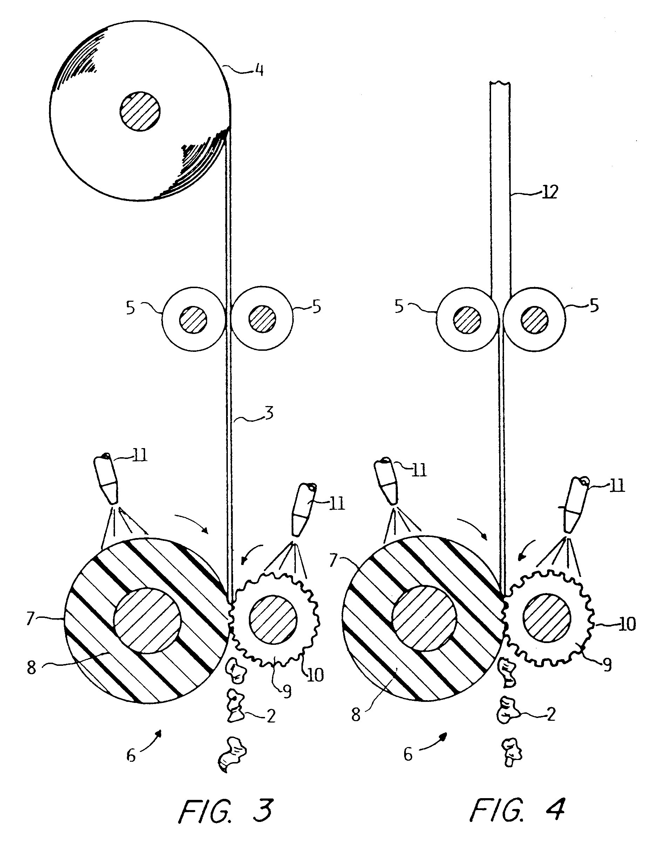

Fig. 3 schematically shows a plant for producing the stuffing elements 2. A plastics sheet 3 with a thickness corresponding to the finished stuffing elements 2 are pulled by means of a pair of rollers 5 from a supply reel 4, and is fed successively to a working station which is generally indicated by 6. The actual forming of the stuffing elements 2 takes place in this station, the sheet 3 being torn and/or cut into suitable pieces of sheet, which are simultaneously deformed so as to obtain the desired shape. In the example shown in fig. 3 the working station 6 consists of a generally relatively large roller 7 with a web 8 of e.g. a suitable hard rubber, and a smaller shaping roller 9 which consists of hardened steel and has a suitable pattern 10 in the surface. When the rollers 7, 9 rotate in the direction shown by the arrows, the rubber web 8 of the roller 7 will be pressed into the pattern 10 of the roller 9 with the plastics sheet 3 between these, so that the sheet is cut into suitable pieces 2 which simultaneously receive an imprint of the pattern 10 of the roller 9. According to the shape of this pattern the stuffing elements 2 may thus be formed with any desired configuration.

The mechanical properties of the finished stuffing elements 2, including strength and elasticity, depend partly upon the working degree, partly upon the starting material 3. If this is a hard, elastic material, the process can advantageously be caused to proceed in a hot state by heating the plastics sheet 3 by suitable heating means (not shown) before the actual working. Additionally, a cooling and lubricating agent may be added during the working process via nozzles 11, and said cooling and lubricating agent may have a composition such that the liquid upon drying leaves a rubber-like coating on the stuffing elements. The wear resistance of the individual stuffing elements is increased hereby, and any noise from the mutual rubbing of the elements in use is reduced or eliminated completely, which is advantageous in particular when the stuffing is used for bedclothes, such as pillows and eiderdowns.

Fig. 4 shows a second plant for producing the stuffing elements 2. This plant corresponds completely to the one shown in fig. 3, except that the plastics sheet 3 is replaced by a starting object 12 having a relatively large thickness, which is then rolled in cold or hot state down to sheet thickness by means of the rollers 5. Commercially available semi-manufactured articles in the form of e.g. sheets and rods may advantageously be used as the starting object 12. The actual working to stuffing elements takes place in the same manner as described above with reference to fig. 3 and will therefore not be discussed additionally here.

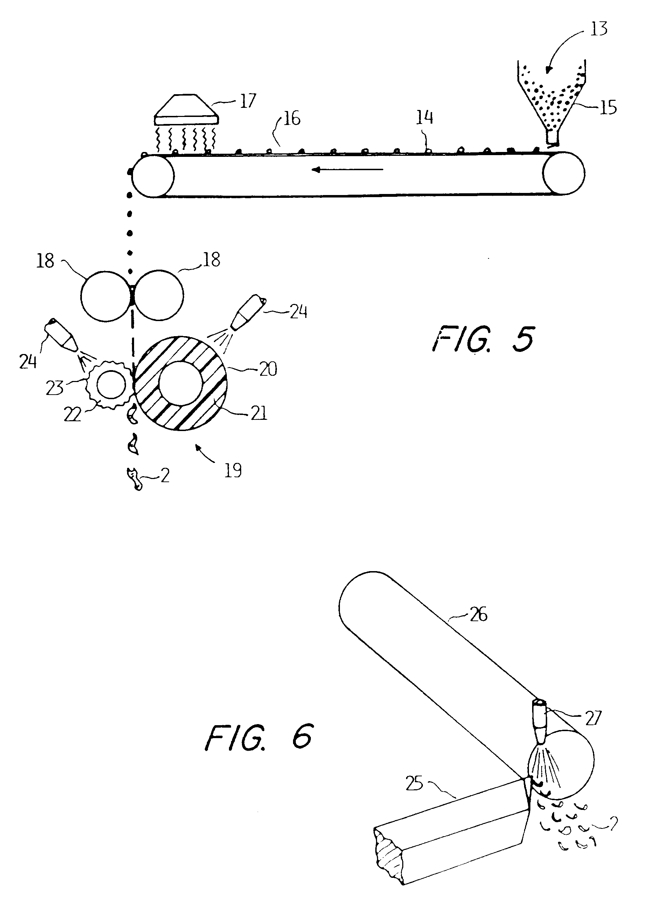

Fig. 5 schematically shows a third plant for producing the stuffing elements 2. In this case the starting material is a suitable finely divided granulate 13 which is stored in a supply hopper 15 from which the individual grains 14 of the granulate 13 are added mutually spaced to an endless belt conveyor 16 which feeds the grains 14 in the direction shown by the arrow. The grains are heated during this movement with a heating means 17 by e.g. radiant heat or hot air, following which the grains now heated drop vertically down between two front rollers 18, which roll the individual grains down to a suitable thickness, following which they continue to a working station 19 where the grains 14 are shaped to the final shape of the stuffing elements 2. In this case too, the working station comprises a relatively large roller 20 with a suitable hard rubber web 21 and a smaller shaping roller 22 with a pattern 23 in the surface. A cooling and lubricating agent is added via spray nozzles 24, and the working station 19 generally operates in quite the same manner as described with reference to figs. 3 and 4; however, the pattern 23 in the shaping roller 22 is not provided with cutting members since each individual grain automatically becomes a stuffing element so that the often complicated tearing or cutting process is eliminated in this case. Another advantage provided by the plant shown in fig. 5 is that the plant is capable of producing the stuffing elements directly from a granulate, thereby completely obviating the often considerably costs incidental to first producing a semimanufacture of the granulate.

Finally, fig. 6 schematically shows a fourth plant for producing the stuffing elements 2, which are produced by chipping of a rod, tube, block or plate with a relatively large thickness by means of chipping working, such as turning, milling or planing. In this case, will simultaneous supply of a cooling and lubricating agent from a spray nozzle 27, a rod 26 is turned by means of a turning tool 25 into turnings 2, each of which forms an individual stuffing element. The advantage of this embodiment of the method is in particular that very strong and elastic plastics materials may be used, e.g. curable and optionally additionally reinforced plastics materials, as well as hard and elastic foamed plastics materials from which particularly light, elastic and thermally insulating stuffing elements may be formed.

The stuffing described above is suitable for a large number of various purposes.

These include e.g. bedclothes, such as eiderdowns and pillows where the stuffing can advantageously replace e.g. down and feathers owing to the lightness and soft, elastic deformability of the stuffing as well as its ability to withstand boiling and autoclaving at bacteria-killing temperatures, to which should be added that the stuffing does not cause any discomfort to allergics, which is of great importance in particular when the stuffing is to be used for bedclothes at hospitals and similar institutions.

The stuffing may also be adapted so that it can withstand rather huge loads, and this variant is useful in particular for padding of mattresses and upholstered furniture.

Owing to the great thermal insulation capacity of the stuffing it may moreover be used as insulation in houses and thermal installations in general. A stuffing whose material contains a large number of evenly distributed small air cells is particularly useful for this purpose.

## Claims

1. A stuffing consisting of a plurality of preferably loosely disposed individual stuffing elements of a plastics material selected from the group of polyethylene, polypropylene, polyester, polyvinyl chloride and polyvinyl acetate or from physical mixtures, copolymers and laminates of these, **characterized** in that each stuffing element is shaped as a leaf spring and consists of a thin, foil-like piece of sheet which is curved in many directions, said piece of sheet having a thickness within the interval from 1 to less than 60 µm, preferably from 5 to 30 µm, and in particular from 10 to 20 µm, as well as an extent within the interval from 1 to 100 mm, preferably from 1 to 30 mm and in particular from 1 to 15 mm.

2. A stuffing according to claim 1, **characterized** in that the plastics material is cross-linked.

3. A stuffing according to claim 1, **characterized** in that the plastics material contains a large number of evenly distributed small air cells.

4. A stuffing according to one or more of claims 1-3, **characterized** in that it comprises stuffing elements of various thickness, size and configuration.

5. A method of producing a stuffing of the type defined in claims 1-4, **characterized** by providing a starting object of a plastics material selected from the group of polyethylene, polypropylene, polyester, polyvinyl chloride and polyvinyl acetate or from physical mixtures, copolymers and laminates of these and then forming from said starting object in cold or hot state a plurality of stuffing elements in the form of thin, foil-like pieces of sheet curved in many directions.

6. A method according to claim 5, **characterized** by using as starting object a plastics sheet which is torn and/or cut into suitable pieces of sheet, each of which is deformed so as to be permanently curved in many directions.

7. A method according to claim 5**, characterized** by using a starting object having a relatively large thickness, which is reduced to the intended thickness of the stuffing element, preferably by rolling or pressing with simultaneous or subsequent tearing and/or cutting into suitable pieces of sheet, each of which is deformed so as to be permanently curved in many directions.

8. A method according to claim 5, **characterized** in that the stuffing elements are shaped from their respective e.g. ball-shaped or polyhedral relatively thick starting objects, which are rolled or pressed down to a piece of sheet with desired thickness and curved in many directions.

9. A method according to claim 5, **characterized** by using a starting object in the form of a rod, tube, block or plate with a relatively large thickness, and subjecting this starting object to chipping working, such as turning, milling or planing to form a plurality of stuffing elements in the form of thin, foil-like pieces of sheet curved in many directions.

10. A method according to one or more of claims 5-9, **characterized** by adding to at least the treatment zone in which the forming of the filling elements takes place, a cooling and lubricating liquid having such consistency and composition that the liquid upon drying leaves a rubber-like coating on the resulting stuffing elements.

11. Bedclothes, such as a pillow or an eiderdown, **characterized** in that it is stuffed with a stuffing of the type defined in claims 1-4.

12. A mattress, **characterized** in that it is stuffed with a stuffing of the type defined in claims 1-4.

13. Upholstered furniture, such as a chair or a sofa, **characterized** in that it is padded with a stuffing of the type defined in claims 1-4.

14. A thermal insulation in a house, refrigerating furniture or other thermal installation, **characterized** in that the insulation consists of a stuffing of the type defined in claims 1-4.

## Patentansprüche

1. Füllmaterial, das eine Vielzahl von vorzugsweise lose angeordneten einzelnen Füllelementen aus einem Kunststoffmaterial besteht, das aus der Gruppe aus Polyethylen, Polypropylen, Polyester, Polyvinylchlorid und Polyvinylacetat oder aus Stoffmischungen, Copolymeren und deren Laminaten ausgewählt ist, dadurch gekennzeichnet, daß jedes Füllelement wie eine Blattfeder ausgebildet ist und aus einem dünnen, folienartigen Bogenstück besteht, welches in mehreren Richtungen gekrümmt ist, wobei die Dicke des Bogenstücks innerhalb des Intervalls von 1 bis weniger als 60 µm, vorzugsweise von 5 bis 30 µm und insbesonders von 10 bis 20 µm liegt sowie die Ausdehnung innerhalb des Intervalls von 1 bis 100 mm, vorzugsweise von 1 bis 30 mm und insbesonders von 1 bis 15 mm liegt.

2. Füllmaterial nach Anspruch 1, dadurch gekennzeichnet, daß das Kunststoffmaterial quervernetzt ist.

3. Füllmaterial nach Anspruch 1, dadurch gekennzeichnet, daß das Kunststoffmaterial eine große Anzahl von gleichmäßig verteilten kleinen Luftzellen enthält.

4. Füllmaterial nach einem oder mehreren der Ansprüche 1 bis 3, dadurch gekennzeichnet, daß es Füllelemente verschiedener Dicke, Größe und Struktur aufweist.

5. Verfahren zur Herstellung eines Füllmaterials der in den Ansprüchen 1 bis 4 definierten Machart, gekennzeichnet durch das Vorsehen eines Ausgangsgegenstands aus einem Kunststoffmaterial, das aus der Gruppe aus Polyethylen, Polypropylen, Polyester, Polyvinylchlorid und Polyvinylacetat oder aus Stoffmischungen, Copolymeren und deren Laminaten ausgewählt ist, und durch anschließendes Formen ausgehend von dem Ausgangsgegenstand im kalten oder heißen Zustand einer Vielzahl von Füllelementen in Form von dünnen, folienartigen Bogenstücken, die in mehreren Richtungen gekrümmt sind.

6. Verfahren nach Anspruch 5, dadurch gekennzeichnet, daß unter Verwendung eines Kunststoffbogens als Ausgangsmaterial, welches in passende Bogenstücke gerissen und/oder geschnitten wird, jedes von diesen derart verformt wird, das es in mehreren Richtungen dauerhaft gekrümmt ist.

7. Verfahren nach Anspruch 5, gekennzeichnet durch die Verwendung eines Ausgangsgegenstandes mit relativ großer Dicke, welche zur beabsichtigten Dicke des Füllelementes hin verringert wird, und zwar vorzugsweise durch Walzen oder Pressen mit gleichzeitigem oder darauffolgendem Reißen und/oder Schneiden in geeignete Bogenstücke, von denen jedes in mehrere Richtungen gekrümmt ist.

8. Verfahren nach Anspruch 5, dadurch gekennzeichnet, daß die Füllelemente ausgehend von ihren jeweiligen, beispielsweise kugelförmigen oder polyedrischen, relativ dicken Ausgangsgegenständen gebildet sind, die zu einem Bogenstück gewalzt oder gepresst sind, und zwar mit der gewünschten Dicke und in mehreren Richtungen gekrümmt.

9. Verfahren nach Anspruch 5, gekennzeichnet durch die Verwendung eines Ausgangsgegenstandes der Form einer Stange, eines Rohrs, eines Blocks oder einer Platte mit relativ großer Dicke und durch die spannabhebende Bearbeitung dieses Ausgangsgegenstandes, wie etwa Drechslen, Fräsen oder Hobeln, um eine Vielzahl von Füllelementen in der Form von dünnen, folienartigen, in mehreren Richtungen gekrümmten Bogenstücken zu bilden.

10. Verfahren nach einem oder mehreren der Ansprüche 5 bis 9, dadurch gekennzeichnet, daß auf zumindest den Behandlungsbereich, bei dem die Bildung der Füllelemente stattfindet, eine Kühl- und Schmierflüssigkeit mit derartiger Konsistenz und Zusammensetzung zugegeben wird, daß die Flüssigkeit nach dem Trocknen eine kautschukartige Beschichtung auf den resultierenden Füllelementen hinterläßt.

11. Bettwäsche, wie etwa ein Kissen oder eine Eiderdaune, dadurch gekennzeichnet, daß es mit Füllmaterial der in den Ansprüchen 1 bis 4 definierten Machart gefüllt ist.

12. Matratze, dadurch gekennzeichnet, daß diese mit einem Füllmaterial der in den Ansprüchen 1 bis 4 definierten Machart gefüllt ist.

13. Gepolstertes Möbelstück, wie etwa ein Sessel oder ein Sofa, dadurch gekennnzeichnet, daß es mit einem Füllmaterial der in den Ansprüchen 1 bis 4 definierten Machart gefüttert ist.

14. Wärmeisolierung in einem Haus, einer Kühleinrichtung oder einem weiteren Wärmeeinbau, dadurch gekennzeichnet, daß die Isolierung aus einem Füllmaterial der in den Ansprüchen 1 bis 4 definierten Machart besteht.

## Revendications

1. Rembourrage composé d'une pluralité d'éléments individuels de rembourrage disposés de préférence sans être serrés les uns contre les autres, ces éléments étant en un matériau plastique choisi parmi le groupe des polyéthylène, polypropylène, polyester, chlorure de polyvinyle et acétate de polyvinyle ou parmi leurs mélanges physiques, copolymères et stratifiés de ceux-ci, caractérisé en ce que chaque élément de rembourrage a la forme d'un ressort à lames et est composé d'un morceau de feuille mince, courbé en de multiples directions, ce morceau de feuille ayant une épaisseur comprise entre 1 et moins de 60 µm, de préférence entre 5 et 30 µm, et notamment entre 10 et 20 µm, ainsi qu'une étendue comprise entre 1 et 100 mm, de préférence entre 1 et 30 mm, et notamment entre 1 et 15 mm.

2. Rembourrage selon la revendication 1, caractérisé en ce que le matériau plastique est réticulé.

3. Rembourrage selon la revendication 1, caractérisé en ce que le matériau plastique contient un grand nombre de petites cellules d'air réparties régulièrement.

4. Rembourrage selon une ou plusieurs des revendications 1 à 3, caractérisé en ce qu'il comprend des éléments de rembourrage d'épaisseur, de taille et de configuration différentes.

5. Procédé pour produire un rembourrage du type décrit dans les revendications 1 à 4, caractérisé en ce qu'est défini un objet de départ en matériau plastique choisi parmi le groupe des polyéthylène, polypropylène, polyester, chlorure de polyvinyle et acétate de polyvinyle, ou parmi leurs mélanges physiques, copolymères ou stratifiés de ceux-ci, et en ce qu'est réalisée à partir de cet objet de départ dans un état froid ou chaud une pluralité d'éléments de rembourrage ayant une forme de morceaux de feuille mince et courbés dans de multiples directions.

6. Procédé selon la revendication 5, caractérisé en ce qu'est utilisée comme objet de départ une feuille de plastique qui est transformée et/ou coupée en morceaux de feuille convenables, chacun de ces morceaux étant déformé afin d'être courbé de manière permanente dans de multiples directions.

7. Procédé selon la revendication 5, caractérisé en ce qu'est utilisé un objet de départ ayant une épaisseur relativement large, qui est réduite à l'épaisseur voulue de l'élément de rembourrage, de préférence par roulage ou pressage avec un déchirement simultané ou subséquent et/ou une coupe pour obtenir des morceaux de feuille convenables, chacun de ces morceaux étant déformé afin d'être courbé de manière permanente dans de multiples directions.

8. Procédé selon la revendication 5, caractérisé en ce que les éléments de rembourrage sont réalisée à partir de leurs éléments de départ respectifs relativement épais, par exemple en forme de balle ou de polyèdre, et qui sont roulés et pressés jusqu'à obtenir un morceau de feuille ayant l'épaisseur désirée et courbé dans de multiples directions.

9. Procédé selon la revendication 5, caractérisé en ce qu'est utilisé un objet de départ de la forme d'une tige, d'un tube, d'un bloc ou d'une plaque ayant une épaisseur relativement grande, et en ce que cet objet de départ est soumis à un usinage, tel que du tournage, du fraisage ou du rabotage, afin de réaliser une pluralité d'éléments de rembourrage ayant la forme de morceaux de feuille mince courbés dans de multiples directions.

10. Procédé selon une ou plusieurs des revendications 5 à 9, caractérisé en ce qu'un liquide de refroidissement et de lubrification est ajouté au moins à la zone de traitement dans laquelle la mise en forme des éléments de rembourrage a lieu, ce liquide ayant une consistance et une composition telles qu'en séchant, il libère un enduit caoutchouteux sur les éléments de rembourrage résultants.

11. Literie, telle qu'un oreiller ou un duvet, caractérisée en ce qu'elle est remplie avec un rembourrage du type défini dans les revendications 1 à 4.

12. Matelas, caractérisé en ce qu'il est rempli avec un rembourrage du type défini dans les revendications 1 à 4.

13. Mobilier rembourré, tel qu'une chaise ou un canapé, caractérisé en ce qu'il est rempli avec un rembourrage du type défini dans les revendications 1 à 4.

14. Isolation thermique de maison, matériel de réfrigération ou autre installation thermique, caractérisé en ce que l'isolation comprend un rembourrage du type défini dans les revendications 1 à 4.
